# EUROPÄISCHE PATENTANMELDUNG

(11) **EP 0 794 354 A1**
(43) Veröffentlichungstag der Anmeldung: **10.09.1997**
(21) Anmeldenummer: 97103313.9
(22) Anmeldetag: 28.02.1997
(51) Int. Cl.: F16G 13/16

(54) **Regal für Energieführungsketten**

(30) Priorität: 08.03.1996 DE 19609146
(71) Anmelder: Murrplastik System-Technik GmbH, 71567 Oppenweiler (DE)
(72) Erfinder: Ehmann, Bruno, 73563 Mögglingen (DE); Funk, Rainer, 71543 Wüstenrot (DE)
(74) Vertreter: Jeck, Anton, Dipl.-Ing.

(57) **Zusammenfassung**

Es handelt sich um ein Regal (10) für Energieführungsketten mit Seitenlaschen und Traversen aufweisenden Kettengliedern. Es sind zwischen den Traversen angeordnete und durchgehende Öffnungen (16, 18) aufweisende Trennstege (12, 14) vorgesehen, die in Richtung der Traversen sich erstreckende Sprossen (20) tragen. Die Sprossen (20) durchqueren die Öffnungen (16, 18). Die Trennstege (12, 14) sind mit den Sprossen (20) mittels Verbindungsorganen (22) betrieblich verbindbar.

## Beschreibung

Die Erfindung betrifft ein Regal für Kettenglieder einer Energieführungskette nach dem Oberbegriff des Anspruches 1.

Bei herkömmlichen Regalen bzw. Gestellen der eingangs genannten Art, wie sie z.B. in der DE 3 709 953 A1 beschrieben sind, weisen die Trennstege in Richtung der Energieführungskette sich erstreckende Nuten auf, in die sodann die Enden der Sprossen einschiebbar sind. Ein wesentlicher Nachteil des herkömmlichen Regals besteht darin, daß eine Vielzahl unterschiedlich langer Sprossen hergestellt werden muß, um die aufgenommene Energieführungsleiter optimal unterbringen zu können. Ferner ist in der DE 3 928 234 A1 ein Regal offenbart, bei dem eine ordnungsgemäße Verbindung zwischen den Sprossen und den Trennstegen durch Steckteile herstellbar ist, deren Handhabung jedoch umständlich ist. Eine annähernd kontinuierliche Einstellung der Sprossen ist allein schon deswegen nicht möglich, weil die Sprossen an ihren Enden Bohrungen aufweisen, die mit Noppen der Steckteile betrieblich verbindbar sind. Schließlich ist in der CH-PS 635 175 eine Energieführungskette mit Trennstücken und Halterungen zur höhenmäßigen Abstützung von Auflageelementen beschrieben. Die Halterungen sind als Ausnehmungen ausgebildet, in die die Auflageelemente einschiebbar sind.

Ausgehend von dem obigen Stand der Technik liegt der Erfindung die Aufgabe zugrunde, ein Regal beziehungsweise ein Gestell für Kettenglieder einer Energieführungskette zu schaffen, das mit minimalem technischen Aufwand herstellbar ist und bei dem die Länge der Sprossen annähernd kontinuierlich bereitstellbar ist. Darüber hinaus soll eine ordnungsgemäße Verbindung zwischen den Sprossen und den Trennstegen auch bei hoher Belastung der Energieführungskette gewährleistet sein.

Die gestellte Aufgabe wird erfindungsgemäß durch die Merkmale des Anspruches 1 gelöst.

Man erkennt, daß die Erfindung jedenfalls dann verwirklicht ist, wenn es sich um ein Regal handelt, bei dem die Sprossen mit den Trennstegen mittels Verbindungsorganen verbindbar sind, die vorzugsweise die miteinander verbindenden Teile durchqueren und diese zumindest kraftschlüssig miteinander verbinden. Das Regal hat somit Eigenschaften eines einstückigen Regals, jedoch mit dem wesentlichen Vorteil, daß die Abstände zwischen den benachbarten Trennstegen sowie Sprossen annähernd kontinuierlich einstellbar sind. Somit können die Aufnahmeräume für die zu führenden Energieführungsleiter optimal bestimmt werden. Die Trennstege können in Längsrichtung der Sprossen problemlos verstellt und im gewünschten Bereich mit den Traversen ordnungsgemäß verbunden werden. Es müssen auch nicht mehr unterschiedlich lange Sprossen hergestellt werden, es reicht vielmehr, wenn Sprossen mit maximaler Länge hergestellt werden, die nach Bedarf abgelängt werden können. Da das Regal regelmäßig mehrere Sprossen und Trennstege aufweist, wird durch die zwischen den Sprossen und den Trennstegen hergestellte Verbindung auch eine ordnungsgemäße Verbindung der Trennstege innerhalb der Kettenglieder gewährleistet.

Weitere zweckmäßige und vorteilhafte Ausgestaltungen der Erfindung gehen aus den Unteransprüchen hervor.

Eine besonders zweckmäßige Ausgestaltung sieht vor, daß die Verbindungsorgane die Trennstege mit den Sprossen kraftschlüssig verbinden. Durch diese Maßnahmen wird zwischen den Sprossen und den sie tragenden Trennstegen eine feste Verbindung hergestellt, die den vorgesehenen Belastungen der Energieführungskette Stand hält.

Eine weitere zweckmäßige Ausgestaltung sieht vor, daß die Verbindungsorgane mit den Trennstegen und/oder den Sprossen lösbar verbindbar sind. Durch diese Maßnahmen wird ein Verbindungsorgan vorgeschlagen, das mit den Sprossen und den Trennstegen durch Steckverbindung lösbar verbindbar ist.

Eine weitere zweckmäßige Ausgestaltung sieht vor, daß das Verbindungsorgan in Form eines Stiftes ausgebildet ist, das die Ausnehmungen der Trennstege und der Sprossen durchquert. Die Sprossen sind regelmäßig plattenförmige Körper mit in etwa rechteckigem Außenumriß, wobei die Höhe wenige Millimeter beträgt, während die Breite mehrere Zentimenter lang sein kann. Im Rahmen dieses Erfindungsgedankens ist es zweckmäßig, wenn die Ausnehmungen der Sprossen sich in bezug auf die Längsachse quer erstrecken. Bezüglich der Herstellung solcher Sprossen ist es vorteilhaft, wenn alle Ausnehmungen der Sprossen in einer Reihe angeordnete und als durchgehende Öffnungen ausgebildet sind, die mit den Verbindungsorganen form- und/oder kraftschlüssig verbindbar sind. Dabei ist es zweckmäßig, wenn die Reihe aus den dicht nebeneinander angeordneten Öffnungen gebildet ist. Durch diese Maßnahme ist möglich, eine praktisch stufenlose Verstellung der Trennstege in Richtung der Sprossen zu erreichen. Diese Ausnehmungen können selbstverständlich auch in den vertikal sich erstreckenden Seitenwänden der Sprossen ausgebildet sein, die nach außen zu offen sind.

Eine weitere zweckmäßige Ausgestaltung sieht vor, daß die Trennstege die Öffnungen definierende Sprossenträger aufweisen, wobei die Ausnehmungen in den Sprossenträgern beziehungsweise zwischen den Sprossenträgern ausgebildet sein können. Dabei ist es zweckmäßiger, wenn die Ausnehmungen die Sprossenträger in ihrer Längs- oder Querrichtung durchqueren. Durch diese Maßnahmen können die Verbindungsorgane in Richtung der Längsachsen der Trennstege bzw. quer zu diesen gesteckt werden. Dabei sind Öffnungen der Sprossen mit den Öffnungen der Trennstege so aufeinander abgestimmt, daß eine feste und unverrückbare Verbindung zwischen den Sprossen und den Trennstegen herstellbar ist.

Bezüglich der Herstellung der erfindungsgemäßen Trennstege ist es zweckmäßig, wenn die Ausnehmungen zu der einen oder anderen Seitenlasche hin offen sind. Durch diese Maßnahmen wird erreicht, daß für die Herstellung der Trennstege, die regelmäßig aus Kunststoff bestehen, keine Schieber erforderlich sind. Ferner sieht eine zweckmäßige Ausgestaltung der Erfindung vor, daß in jedem Sprossenträger des jeweiligen Trennsteges jeweils eine Ausnehmung ausgebildet ist, die miteinander fluchten. Dabei ist es zweckmäßiger, wenn die Ausnehmungen des jeweiligen Trennsteges abwechselnd zur einen und zur anderen Seitenlasche hin offen und als U-förmige Einschnitte ausgebildet sind.
In manchen Fällen ist es wünschenswert, wenn anstatt im Querschnitt rechteckförmiger Sprossen solche verwendet werden, die einen kreisrunden oder ovalen Querschnitt aufweisen. Um auch solche Sprossen mit den Trennstegen problemlos verbinden zu können, sieht eine zweckmäßige Ausgestaltung der Erfindung vor, daß die Öffnungen der Trennstege in ihrem mittleren Bereich bogenförmige Erweiterungen aufweisen. Diese Erweiterungen können vorzugsweise mit diesen Sprossen formschlüssig verbindar sein.

Schließlich sieht eine zweckmäßige Ausgestaltung der Erfindung vor, daß die Verbindungsorgane einen runden oder ovalen Querschnitt aufweisen und an einem Ende einen Betätigungskörper besitzen.

Ein Ausführungsbeispiel der Erfindung ist in der Zeichnung schematisch dargestellt und wird im folgenden näher erläutert. Es zeigen
- Fig. 1: ein Regal mit einer Sprosse und zwei Trennstegen in Seitenansicht und teilweise vertikal geschnitten,
- Fig. 2: ein weiteres Regal in Seitenansicht und teilweise geschnitten,
- Fig. 3: einen Trennsteg in Stirnansicht,
- Fig. 4: einen Schnitt entlang der Linie IV - IV nach Fig. 3,
- Fig. 5: eine Sprosse in vertikaler Draufsicht und
- Fig. 6: ein Verbindungsorgan in Seitenansicht.

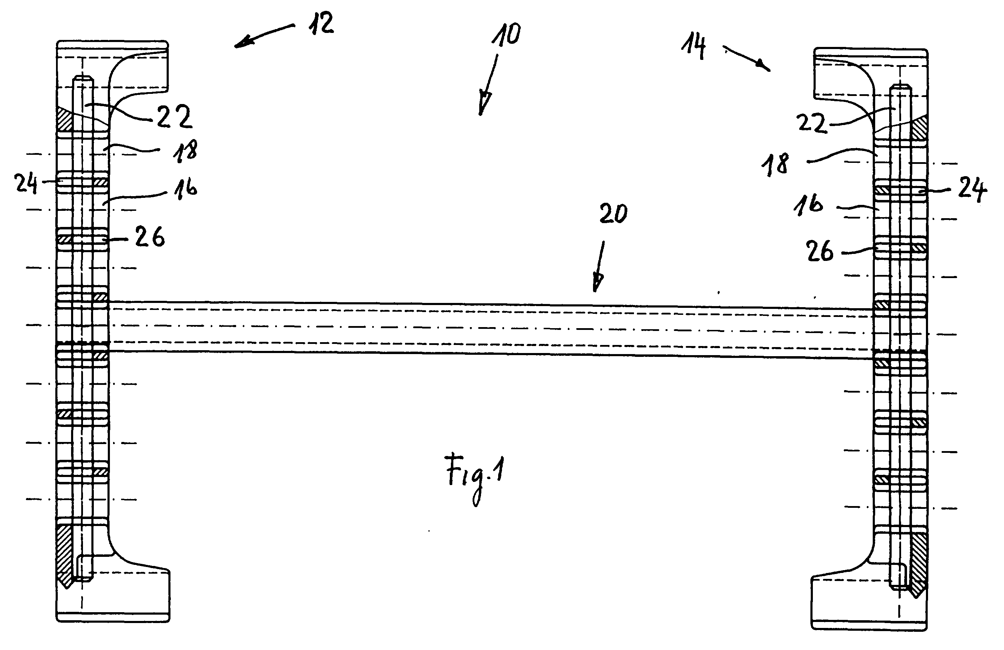

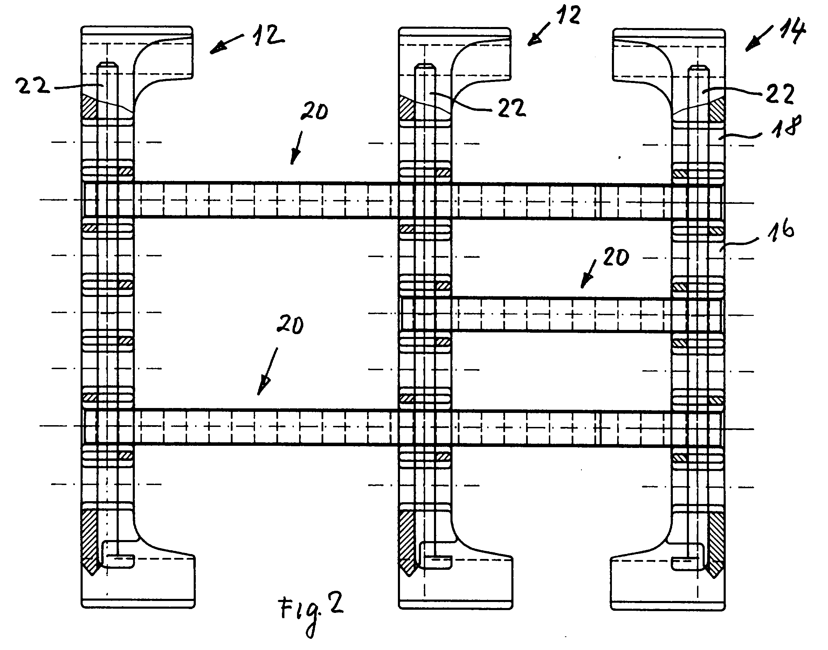

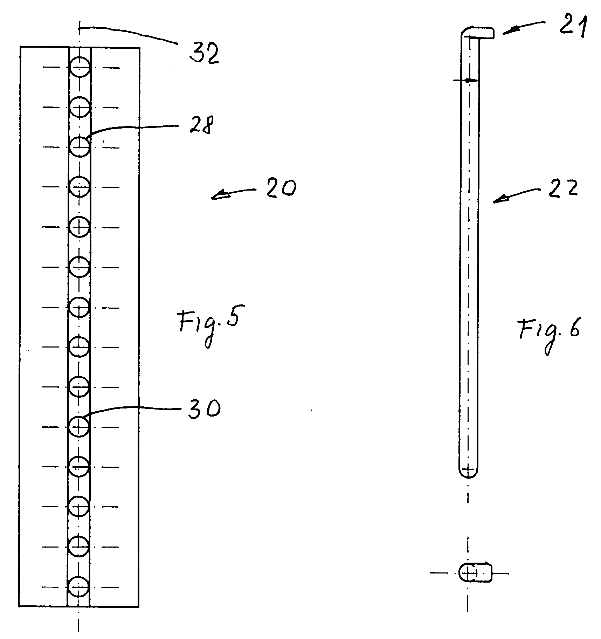

In den Fig. 1 und 2 ist jeweils ein Regal 10 für Energieführungsketten mit Seitenlaschen und Traversen aufweisenden Kettengliedern dargestellt. Das Regal 10 besitzt zwischen den Traversen angeordnete und durchgehende Öffnungen 16, 18 aufweisende Trennstege 12, 14, die in Richtung der Traversen sich erstreckende Sprossen 20 tragen. Die Sprossen 20 durchqueren die Öffnungen 16, 18. Die Trennstege 12, 14 sind mit den Sprossen 20 mittels Verbindungsorganen 22 betrieblich verbindbar. Die Verbindungsorgane 22 verbinden die Trennstege 12, 14 mit den Sprossen 20 kraftschlüssig und sind in Form von Stiften ausgebildet, die die Ausnehmungen 24, 26 bzw. 28, 30 der Trennstege 12, 14 bzw. Sprossen 20 durchqueren. Die Ausnehmungen 28, 30 der Sprossen 20 erstrecken sich in bezug auf deren Längsachsen 32 quer zu diesen und vertikal von oben nach unten. Die Ausnehmungen 28, 30 der Sprossen 20 (vgl. Fig. 5) sind als in einer Reihe angeordnete und durchquerende Öffnungen ausgebildet, die mit den Verbindungsorganen 22 form- und/oder kraftschlüssig verbindbar sind. Die Reihen sind aus den dicht nebeneinander angeordneten Öffnungen 28, 30 gebildet und die Öffnungen 28, 30 liegen auf der Längsmittelachse 32 der Sprosse 20. Die Öffnungen könnten jedoch auch als in den Seitenwänden der Sprossen ausgebildete und nach außen zu offene Ausnehmungen sein.

Man erkennt, daß die Trennstege 12, 14 die Öffnungen 16, 18 definierende Sprossenträger 23, 25 aufweisen und daß die Ausnehmungen 24, 26 in den Sprossenträgern 23, 25 ausgebildet sind. Die Ausnehmungen 24, 26 durchqueren die Sprossenträger in ihrer Querrichtung und sind zu der einen bzw. anderen Seitenlasche hin offen. In jedem Sprossenträger 23, 25 des jeweiligen Trennsteges 12, 14 ist jeweils eine Ausnehmung 24, 26 ausgebildet, die miteinander fluchten. Die Ausnehmungen 24, 26 des jeweiligen Trennsteges 12, 14 sind so ausgebildet, daß sie abwechselnd zur einen und zur anderen Seitenlasche hin offen sind. Ferner ist zu erkennen, daß die Verbindungsorgane 22 die Ausnehmungen 24, 26 des jeweiligen Trennsteges 12, 14 in Achsrichtung der Trennstege durchqueren. Die Fig. 6 läßt erkennen, daß das Verbindungsorgan 22 einen runden Querschnitt aufweist und an einem Ende einen Betätigungskörper 21 besitzt.

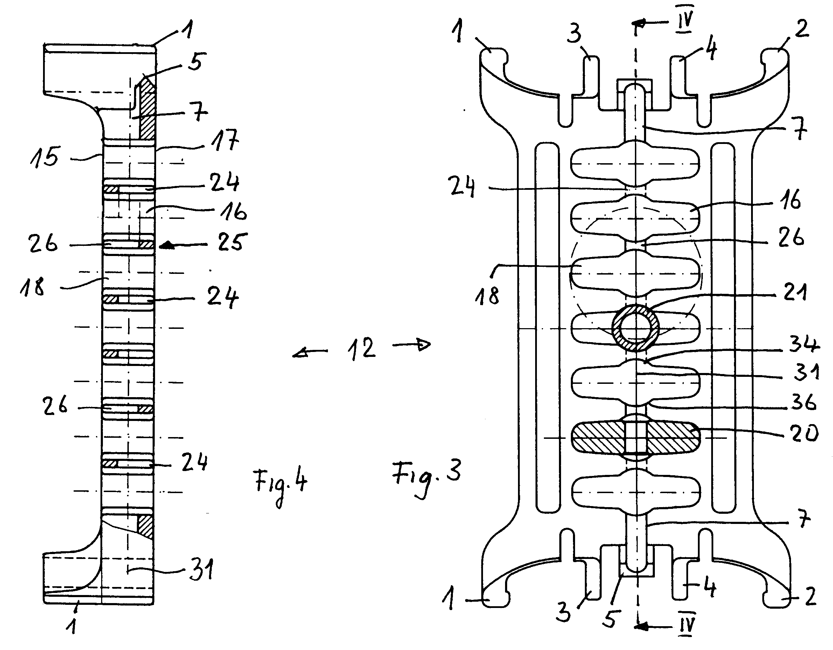

Im einzelnen lassen die Fig. 1 bis 4 erkennen, daß der als Kunststoffspritzteil hergestellte Trennsteg 12 ein achssymmetrischer Körper ist, dessen oberes und unteres Ende jeweils zwei Halteschenkel 1, 2 und Führungsschenkel 3, 4 besitzen, wobei zwischen den Führungsschenkeln 3, 4 ein Rastzahn 5, der sich zu seinem Ende hin verjüngt, angeformt ist. Die Schenkel 1 bis 4 sind mit jeweils einer nicht näher dargestellten Traverse in Wirkverbindung bringbar, wobei der Rastzahn 5 mit einer Zahnstange der Traverse zusammenarbeitet. Die Längsachsen 31 des Trennsteges 12 erstreckt sich in gleicher Richtung wie das in die Nuten 7 einbringbare Verbindungsorgan 22. Das Verbindungsorgan 22 ist so bemessen, daß sein Durchmesser in etwa der Breite der Nut 7 entspricht. Nach Einbringung des Verbindungsorgans 22 in die Nut 7, die mit den Ausnehmungen 24, 26, 28, 30 fluchtet, wird eine unverrückbare Verbindung zwischen dem Verbindungsorgan 22 und dem Trennsteg 12 hergestellt. Die Ausnehmungen 24, 26 sind ferner so ausgebildet, daß sie abwechselnd zur Seite 15 und zur Seite 17 des Trennsteges hin offen sind. Der Vorteil dieser Maßnahme besteht insbesondere in der einfachen Herstellung des Trennsteges 12, bei der nur lineare Hin- und Herbewegung ausgeübt werden. Querschieber sind im vorliegenden Falle nicht erforderlich.

Werden in bestimmten Fällen keine Sprossen 20 mit im wesentlichen rechteckigen Querschnitt, sondern vielmehr Rohr-Sprossen 21 benötigt, dann können diese problemlos in die Öffnungen 16, 18 gesteckt werden.

Bei der Komplettierung eines Regals kann wie folgt vorgegangen werden: Es wird der Abstand zwischen den Seitenlaschen festgelegt. Daraufhin können entsprechend lange Sprossen 20 hergestellt werden, und zwar durch Ablängen.

Danach werden die Sprossen mit den Trennstegen mittels Verbindungsorganen 22 ordnungsgemäß verbunden. Ein solches Regal wird schließlich mit den Traversen des jeweiligen Kettengliedes verbunden.

## Patentansprüche

1. Regal (10) für Energieführungsketten mit Seitenlaschen und Traversen aufweisenden Kettengliedern mit zwischen den Traversen angeordneten und durchgehende Öffnungen (16, 18) aufweisenden Trennstegen (12, 14), die in Richtung der Traversen sich erstreckende und die Öffnung (16, 18) durchquerende Sprossen (20) tragen,
gekennzeichnet durch separate Verbindungsorgane (22) zur betriebsgemäßen Verbindung der Trennstege (12, 14) mit den Sprossen (20).

2. Regal nach Anspruch 1,
dadurch gekennzeichnet,
daß die Verbindungsorgane (22) in Form von Stiften ausgebildet sind, die Ausnehmungen (24, 26; 28, 30) der Trennstege (12, 14) und der Sprossen (20) durchqueren.

3. Regal nach Anspruch 1 oder 2,
dadurch gekennzeichnet,
daß die Ausnehmungen (28, 30) der Sprossen (20) sich in bezug auf deren Längsachsen (32) quer erstrecken.

4. Regal nach einem der Ansprüche 1 bis 3,
dadurch gekennzeichnet,
daß die Ausnehmungen (28, 30) der Sprossen (20) als in einer Reihe angeordnete und durchgehende Öffnungen ausgebildet sind, die mit den Verbindungsorganen (22) form- und/oder kraftschlüssig verbindbar sind.

5. Regal nach einem der Ansprüche 1 bis 4,
dadurch gekennzeichnet,
daß die Reihen aus den dicht nebeneinander angeordneten Öffnungen (28, 30) gebildet sind.

6. Regal nach einem der Ansprüche 1 bis 5,
dadurch gekennzeichnet,
daß die Öffnungen als in den Seitenwänden der Sprossen ausgebildete und nach außen hin offene Ausnehmungen ausgebildet sind.

7. Regal nach einem der Ansprüche 1 bis 6,
dadurch gekennzeichnet,
daß die Trennstege (12, 14) die Öffnungen (16, 18) definierende Sprossenträger (23, 25) aufweisen.

8. Regal nach einem der Ansprüche 1 bis 7,
dadurch gekennzeichnet,
daß die Ausnehmungen (24, 26) in den Sprossenträgern (23, 25) beziehungsweise zwischen den Sprossenträgern ausgebildet sind.

9. Regal nach einem der Ansprüche 1 bis 8,
dadurch gekennzeichnet,
daß die Ausnehmungen (24, 26) die Sprossenträger (23, 25) in ihrer Längs- oder Querrichtung durchqueren.

10. Regal nach einem der Ansprüche 1 bis 9,
dadurch gekennzeichnet,
daß die Ausnehmungen (24, 26) zu der einen oder anderen Seitenlasche hin offen sind.

11. Regal nach einem der Ansprüche 1 bis 10,
dadurch gekennzeichnet,
daß in jedem Sprossenträger (23, 25) des jeweiligen Trennstegs (12, 14) Ausnehmungen (24, 26) ausgebildet sind, die miteinander fluchten.

12. Regal nach einem der Ansprüche 1 bis 11,
dadurch gekennzeichnet,
daß die Ausnehmungen (24, 26) des jeweiligen Trennsteges (12, 14) abwechselnd zur einen und zur anderen Seitenlasche hin offen sind.

13. Regal nach einem der Ansprüche 1 bis 12,
dadurch gekennzeichnet,
daß die Verbindungsorgane (22) die Ausnehmungen (24, 26) des jeweiligen Trennsteges (12, 14) in Achsrichtung des Trennsteges (12, 14) durchquert.

14. Regal nach einem der Ansprüche 1 bis 13,
dadurch gekennzeichnet,
daß die Öffnungen (16, 18) der Trennstege (12, 14) die sie durchquerenden Sprossen (20) annähernd formschlüssig umgeben.

15. Regal nach einem der Ansprüche 1 bis 14,
dadurch gekennzeichnet,
daß die Öffnungen (16, 18) in ihrem mittleren Bereich bogenförmige Erweiterungen (34, 36) aufweist.

16. Regal nach einem der Ansprüche 1 bis 15,
dadurch gekennzeichnet,
daß die Verbindungsorgane (22) einen runden oder ovalen Querschnitt aufweisen und an einem Ende einen Betätigungskörper (21) besitzen.

17. Kettenglied für eine Energieführungskette, das zwei mit Abstand voneinander und parallel zueinander angeordnete Seitenlaschen und zwei die Seitenlaschen untereinander verbindbaren Traversen aufweist, mit zwischen den Traversen angeordneten und durchgehenden Öffnungen (16, 18) aufweisenden Trennstegen (12, 14) sowie parallel zu den Traversen sich erstreckende und die Öffnungen (16, 18) durchquerenden Sprossen (20),
gekennzeichnet durch
separate Verbindungsorgane (22) zur betriebsgemäßen Verbindung der Trennstege (12, 14) mit den Sprossen (20).
